# EUROPEAN PATENT APPLICATION

(11) **EP 4 309 767 A1**
(43) Date of publication of application: **24.01.2024**
(21) Application number: 22382686.8
(22) Date of filing: 19.07.2022
(51) Int. Cl.: B01D 53/62, B01D 53/83, B01J 20/04, B01J 20/28, B01J 20/30, B01J 8/08, B01J 19/18

(54) **METHOD OF CAPTURING CO2 FROM THE ATMOSPHERE AND AIR CONTACTOR DEVICE CONFIGURED TO CARRY OUT THE METHOD OF CAPTURING CO2**

(71) Applicant: Consejo Superior De Investigaciones Científicas (CSIC), 28006 Madrid (ES)
(72) Inventor: ABANADES GARCIA, Juan Carlos, 33031 Oviedo (ES); ALVAREZ CRIADO, Yolanda, 33031 Oviedo (ES)
(74) Representative: Pons

(57) **Abstract**

This invention discloses a method of capturing CO₂ from air using solid forms of calcium hydroxide, preferably dry Ca(OH)₂ to form CaCO₃. The method is characterized by the use of Ca(OH)₂ solid forms stacked in an air contactor device so that the air is forced to flow through the air channels created when aligning the holes of the solid forms with the direction of the airflow. The solids are displaced at an average velocity of 0.005 to 0.05 m/hour. The invention also relates to a method of removing CO₂ from the atmosphere and air contactor device configured to carry out the method of capturing CO₂.

## Description

### OBJECT OF THE INVENTION

This invention discloses a method of capturing CO₂ from the atmosphere using solid forms of calcium hydroxide, preferably dry Ca(OH)₂ to form CaCO₃. The method is characterized by the use of Ca(OH)₂ solid forms stacked in an air contactor device so that the air is forced to flow through the air channels created when aligning the solid forms with the direction of the airflow. The solids are displaced at an average velocity of 0.005 to 0.05 m/hour, preferably in countercurrent mode with respect to the air, for example by intermittent movements of the stacks of solid forms by a warehouse robot. When the Ca(OH)₂ solid forms have the shape and dimensions of masonry units, the carbonated solid forms resulting from the method can be used in construction applications. The invention also relates to an air contactor device configured to carry out the method of capturing CO₂.

### BACKGROUND OF THE INVENTION

Direct Air Capture of CO₂, DAC, followed by permanent storage of the captured CO₂, can be a powerful tool for CO₂ removal from the atmosphere, as required for climate change mitigation. It can also provide a sustainable source of pure CO₂ for industrial uses. The US National Academies, NASEM, published a comprehensive review of the state of the art of DAC technologies in 2019, including a comparison of their energy requirements, technical challenges and cost (National Academies of Sciences, Engineering and Medicine 2019. Chapter 5 in "Negative Emissions Technologies and Reliable Sequestration: A Research Agenda". Washington, DC: The National Academies Press. https://doi.org/10.17226/25259).

The objective of any DAC system is the capture of CO₂ from the atmosphere in quantities large enough to be relevant for climate change mitigation (namely, 1 Mt-CO₂/y, contained in 2×10¹² m³/y of air at standard conditions when capturing 50% of the CO₂ that enters the air contactor device). For such a purpose, air has to be put in contact with an active surface. This can be, either a packing of a solid sorbent or a packing of a solid that is wetted with an active solvent.

In the most developed DAC systems using solid sorbents, adsorption and desorption cycles are alternatively carried out within an air contactor device, using adsorbent materials with typical adsorption capacity of 0.5 to 1.5 mol CO₂/kg adsorbent (NASEM report, 2019). The air velocities during the adsorption part of the cycle are between 1-5 m/s, as a compromise between the need to maximise CO₂ production rates and the need to moderate pressure drop in the air contactor device when the air passes through the air channels formed by the packed solids (see EP3725391B1 and WO2022104252A1).

US8119091B2 discloses the process under development by Carbon Engineering (Keith et al., A Process for Capturing CO2 from the Atmosphere. Joule 2018, 2 (8), 1573-1594). In this case, the solid packing in the air contactor device does not directly participate in the absorption of CO₂, but it is there to facilitate the intimate contact between the flowing air and a thin film of an aqueous solvent solution of KOH that forms in the walls of the air channels. The solvent is fed into the air contactor device in order to absorb CO₂ to form K₂CO₃. The carbonated solution is continuously extracted from the air contactor device and directed to a causticizer where the KOH is regenerated, still in aqueous solution, when reacting with slaked lime (mainly Ca(OH)₂) to precipitate CaCO₃. After separation and drying, the CaCO₃ is calcined in an oxy-fired calciner to obtain concentrated CO₂ and the CaO fed to a slaker (where CaO hydrates to Ca(OH)₂), thereby closing the two chemical loops. Air is driven into the air contactor devices using induced draft fans, ID fans, located at the air contactor device outlet. As in other DAC systems, pressure drop in the air contactor device must be limited to less than 200 Pascals to moderate electrical energy requirements of the fans. On the other hand, to ensure that the frontal cross-sectional area perpendicular to the airflow in the air contactor device (which is the area resulting from the sum of the area free of solids needed to accommodate the air channels and the frontal cross-sectional area occupied by the packing) is kept to a minimum, it is important to increase the superficial gas velocity as much as possible through the air contactor device and through the air channels. However, high gas velocities are to be avoided to prevent the entrainment of drops and/or solids into the airflow. These and other design compromises limit the air velocity to 1.5 m/s in a Carbon Engineering design that has been adopted by NASEM. As noted by NASEM's report (2019), for a 75% CO₂ capture efficiency from air, the contactor device frontal cross-sectional area needed to separate 1 Mt/y CO₂ reaches 38,000 m². US9095813B2 discloses, among other claims, the refinement of a modular air contactor device with the air contactor device frontal face being at least partially wind penetrable to allow wind to flow through the packing and thus reduce the energy consumption of the fans. The height of such air contactor device is 20 m and the depth is 3 m. The depth of the packing coincides with the length from the air contactor device inlet to the outlet. The volume of the air contactor device is occupied by the solid packing and by air channels not containing any solids, evenly distributed in the air contactor device volume and connecting the air contactor device inlet with the outlet. The geometry of such air channels, in terms of length, separation between walls of the air channels, cross-section of the air channel perpendicular to the airflow etc. is one of the key design features of the packing in all DAC systems, as it determines the overall performance of the air contactor device (in terms of pressure drop and CO₂ capture efficiency, both variables increasing as the air contactor device depth increases).

The main energy consumption in the DAC system by Carbon Engineering is linked to the need to calcine CaCO₃ to produce pure CO₂ and carbon-free CaO used to manufacture Ca(OH)₂. The minimum energy requirements are given by the enthalpy of calcination of CaCO₃ (179 kJ/mol at 900ºC or 4.1 GJ/t CO₂). Said requirements go up to 6-9 GJ/t CO₂ when considering thermal inefficiencies and the need of pure oxygen to drive the oxy-fired calciner needed to produce carbon-free CaO (NASEM, 2019). However, major industrial developments are in progress to reduce the energy requirements of the manufacture of carbon-free CaO and Ca(OH)₂. In particular when the oxygen required for oxy-fired calcination becomes available as a waste gas stream resulting from the deployment of electrolysers to produce H₂ from renewable electricity.

Particularly relevant to this patent is the research work related to the direct use of dry Ca(OH)₂ as a functional material for CO₂ capture from air. Lime mortars have been used extensively in construction applications for centuries, and they are known to carbonate, when dried, over long periods of time (i.e., from months to centuries). When dried, they have porosities of between 0.2-0.6 (defined as the fraction of the mortar form's volume not occupied by Ca(OH)₂ solid with a true density of 2211 kg/m³) and their specific surface area can vary between 10 to 50 m²/g depending on the Ca(OH)₂ precursor (the lower limit in this interval is characteristic of lime mortars used for construction applications while the upper limit refers to Ca(OH)₂ powders commercialized for applications requiring higher reactivity with gases, such as in acid gas removal methods).

Beruto et al. (Liquid-like H2O adsorption layers to catalyze the Ca(OH)2/CO2 solid-gas reaction and to form a non-protective solid iroduct layer at 20°C. J. Eur. Ceram. Soc. 2000, 20 (4), 497-503) investigated the effect of relative humidity in the air to promote faster carbonation of dry Ca(OH)₂ powders at relative humidities between 50-100%. Extremely slow carbonation rates were observed when attempting carbonation of Ca(OH)₂ in dry air.

Morales-Florez et al. (Hydration and carbonation reactions of calcium oxide by weathering: Kinetics and changes in the nanostructure. Chem. Eng. J. 2015, 265, 194-200) reported a complete conversion of dry CaO and Ca(OH)₂ powders to CaCO₃ after about 1000 hours of contact time with ambient humid air. However, substantial differences in carbonation time (i.e. 300 h vs 550h) were observed when comparing dry porous Ca(OH)₂ materials with different specific surface areas of (40 m²/g and 20 m²/g, respectively).

Erans et al. (Carbonation of lime-based materials under ambient conditions for direct air capture. J. Clean. Prod. 2020, 242, 118330) also investigated the carbonation of CaO and Ca(OH)₂ dry powders under ambient conditions for direct air capture. Their experiments of carbonation at different ambient conditions, using samples of 1.0 kg of CaO powder arranged in a thin layer (~5 mm) on a tray, for time scales up to 500-1000 h, revealed virtually complete hydration of the CaO to Ca(OH)₂ after 200 h, followed by maximum carbonation conversion of the Ca(OH)₂ to CaCO₃ of between 0.7-0.8, after 300-600 hours of exposure to ambient humid air.

Based on the previous findings, Abanades et al., (An air CO₂ capture system based on the passive carbonation of large Ca(OH)₂ structures, Sust. Energ. & Fuels, 2020, 4, 3409-3417) have proposed a full direct air capture system relying on the manufacture of vast stationary infrastructures of Ca(OH)₂ (stacked plates, dry Ca(OH)₂ mortars or porous bags of high surface Ca(OH)₂ powder, such as those used for the removal of CO₂ from fruit stores, i.e. FRUITCAL^{®}). The carbonation rates of such structures are modelled by adapting a CO₂ pore diffusion model (as used for state-of-the-art carbonation of large concrete structures) to calculate the rate of carbonation of Ca(OH)₂ solid forms taking the shape of prefabricated plates. The model indicates that the rate of carbonation of said Ca(OH)₂ plates increases proportionally with the porosity of the plate. For example, for a representative porosity of dry standard mortars of Ca(OH)₂ of 0.5, the model predicts the formation of a CaCO₃ layer of 5 mm in 15 days developing inwards from the external surface of the plate, reaching 15 mm in 6 months, so that a plate of 30 mm thickness would be fully carbonated when the two sides of the plate are exposed to air for 6 months. Once carbonated, the plates can be transported to a centralised calcination plant, where pure CO₂ is obtained, as well as the CaO needed to manufacture the Ca(OH)₂ again.

The previous air capture system based on passive carbonation of Ca(OH)₂ has some limitations: the slow transport of CO₂ from the bulk of the atmosphere to the reacting Ca(OH)₂ solid forms demands intense winds, and air contactor device volumes that are one to two orders of magnitude larger than the reference Carbon Engineering DAC system, as stated by Abanades et al (2020). Furthermore, despite the efforts to stack the plates in a way that facilitates the passage of wind between the plates and, thus, the transport of CO₂ to all exposed surfaces of the plates, producing carbonated plates with large differences in local carbonation conversion will be unavoidable. In this context "carbonation conversion" is equivalent to the thickness of the carbonated layer increasing inwards from the exterior surface of the plates. In other words, the Ca(OH)₂ located in the parts of the plates closest to the external boundaries of the stacks, will reach a higher carbonation conversion than the Ca(OH)₂ located towards the interior of the stacks. The low carbonation conversions in the interior parts of the stacks will demand for longer carbonation times to reach the maximum carbonation conversions, making the system less efficient. Low carbonation conversions in parts of the stacks would also increase the cost of the energy consumption for transport and for regeneration of the Ca(OH)₂ solid forms in the centralised calcination plant. Furthermore, different carbonation conversions in different parts of the plates will cause differences in local mechanical properties of the carbonated materials, that will prevent their use in construction applications.

There is already a demand for masonry units manufactured with a negative emission footprints by capturing CO₂ during the curing of a Ca(OH)₂ containing mortar (see for example CarbonBuilt Reversa^{™} Technology). It is therefore desirable that the carbonated solid forms coming from DAC systems using Ca(OH)2 also have suitable dimensions to be used as a masonry unit in construction applications.

In this context, Ca(OH)₂ solid forms are defined as a forms that can be manufactured by molding, extrusion or other techniques that can provide a shape to a mortar containing Ca(OH)₂, including lime mortars obtained by mixing lime, water, and pozzolanic additives if needed. After carbonation, the solid form containing Ca(OH)₂ becomes a carbonated solid form (containing CaCO₃ and residual or unconverted Ca(OH)₂). The standard dimensions of masonry units (masonry blocks, bricks, hollow bricks, tiles, etc.) therefore provide good guidance for selecting the dimensions of the Ca(OH)₂ solid forms used in DAC applications, because the techniques, including the necessary additives, to produce such solid forms already exist today in the construction and solid processing industries.

When considering the use of these Ca(OH)₂ solid forms in CO₂ capture applications from air, one key dimension of the solid form will be the wall thickness, w, defined here as the minimum distance between two parallel adjacent walls exposed to air in the solid form. For example: in a hollow brick the wall thickness is the minimum distance (usually between 5 to 50 mm) separating two holes of the bricks, or the distance between one hole and the exterior surface of the brick. The holes usually have equivalent diameters of between 20-50 mm. In a tile, plate or in a solid brick, the wall thickness is the minimum xyz dimension that defines the external shape of the form. Wall thicknesses of between 5-50 mm have been chosen in (Abanades et al 2020) to facilitate access of CO₂ to plate-like Ca(OH)₂ porous forms. Finally, we note here that there are state-of-the-art additives (such as pozzolonic compounds) to provide the Ca(OH)₂ solid forms with necessary initial stability to be handled and stacked, using standard techniques in the making of bricks and other masonry units.

It is also relevant for the subject of this invention to refer to state-of-the-art warehouse robots, that are commonly used today to execute a vast number of displacements per day in warehouses. Said robots can be designed to slightly lift a parcel (or a stack of solids on a pallet or shelf) from the floor of the warehouse, displace the stack of solids at the average velocity of the robot (up to 2-5 km/h) to a different location in the warehouse, rest the stack on the floor of the warehouse and move to a nearby stack to repeat another displacement action.

From the previous review, it can be concluded that there is still a need for novel methods that could minimize the energy consumption and cost of the DAC systems, for example by reducing unnecessary reaction stages and by finding synergies with techniques and materials in existing industrial activities.

### DESCRIPTION OF THE INVENTION

This invention discloses a method of capturing CO₂ from the atmosphere using solid forms of calcium hydroxide. Preferably, the method it is carried out at ambient conditions. The method uses Ca(OH)₂, that reacts with the CO₂ in the air to form CaCO₃. The Ca(OH)₂ is in the form of a dry porous solid, such as the solids resulting from the drying of a lime mortar. The lime mortar is extruded or molded to prefabricate Ca(OH)₂ solid forms such as bricks, hollow bricks, plates, etc., so as to prevent the entrainment of the Ca(OH)₂ solids when put in contact with the airflow driven to the air contactor device by fans. Alternatively, the method can use bags filled up with Ca(OH)₂ powder as Ca(OH)₂ solid forms, just as those used to capture CO₂ from air in fruit stores. In any case, the Ca(OH)₂ solid form has a porosity of between 0.2 and 0.6 and is able to reach maximum carbonation molar conversion of Ca(OH)₂ to CaCO₃ of 0.6-1 in 200-2000 hours of exposure to humid air with a relative humidity over 50%.

The method of the invention makes use of dry Ca(OH)₂ powders as functional materials for CO₂ capture from air using an air contactor device with reduced air contactor device volumes while producing carbonated solid forms with homogeneous compositions and carbonation conversions, that can find use as masonry units in the construction industry.

Carbonation experiments on candidate Ca(OH)₂ dry powders and solid forms manufactured from lime mortars and then dried have been carried out. Also, from pelletized dry Ca(OH)₂ powder (see below). It has also been developed a model to quantify the CO₂ capture efficiency when air is flowing through an air channel free of solids, defined by walls of porous Ca(OH)₂. As a result of these studies, the invention discloses a method of capturing CO₂ from air using solid forms of calcium hydroxide comprising:
i.) a step of stacking porous Ca(OH)₂ solid forms so that uniformly distributed air channels of equivalent diameter between 0.01-0.1 m are formed, with the walls of the air channels being the walls of the Ca(OH)₂ solid forms exposed to the airflow.
ii.) a step of transporting the stacks of solids to the interior of an air contactor device and positioning them so that the air channels in the stacks of solids are aligned with a main direction of an airflow directed to the air contactor device
iii.) a step of displacing the stacks of solids inside the air contactor device along the main direction of the airflow, at an average velocity of between 0.05 to 0.005 m/h
iv) a step of discharging the stacks of carbonated solid forms formed in the air contactor device after 200-2000 hours of residence time.

As will be shown from experimental results and modelling work below, the method can generate carbonated solid forms with potential uses in construction applications as masonry units. Experiments indicate that the crushing strength of the solid forms is lowest when the carbonation of the Ca(OH)₂ solid form has not yet been initiated. The development of a carbonated layer with thicknesses between 1-10 mm, measured perpendicular from the exposed surfaces to air of the Ca(OH)₂ solid forms, enhances the crushing strength of the carbonated solid forms and facilitates their use in construction applications. In order to fit with the standard dimensions of masonry units in said construction applications, the method further comprises a step of manufacturing Ca(OH)₂ solid forms comprising a wall thickness of between 5 and 50 mm of porous Ca(OH)₂ solid material exposed to airflow, wherein the thickness of the carbonated layer grown inwards from the surfaces exposed to airflow is between 1-10 mm.

To make efficient use of the Ca(OH)₂ solid forms fed into the air contactor device, and to facilitate the use of the carbonated solid forms as masonry units, it is also important to ensure that all exposed surfaces to air in a Ca(OH)₂ solid form develop similar thickness of carbonated layers after their contact with the airflow in the air contactor device. Furthermore, in order to maximize CO₂ capture efficiencies and achieve similar thickness of carbonated layers, preferential air channels in the air contactor device should be avoided. In other words, it is important to pack the Ca(OH)₂ solid forms in the stacks in a way as to ensure that the supply of CO₂ to the exposed solid surfaces in the stack of Ca(OH)₂ solid forms is homogeneous. This can be done, for example, by introducing small plank elements separating the solid forms during the packing process of the solid forms, so that the external surface of the Ca(OH)₂ solid forms is exposed to air under the same conditions in all air channel walls exposed to air. Thus, the step of stacking further comprises forming homogeneously distributed air channels from the stacking of the Ca(OH)₂ solid forms with a gap between them of an equivalent diameter between 0.01-0.1 m when the Ca(OH)₂ solid form has the dimensions of an existing masonry unit without holes.

When the carbonated solid form is to be used as a masonry unit with holes, such as a hollow brick, the step of stacking further comprises forming homogeneously distributed air channels from the stacking of the Ca(OH)₂ solid forms with a gap between them that has the same equivalent diameter as a holes when the Ca(OH)₂ solid form is a masonry unit with said holes, such as a hollow brick, and the holes of the masonry unit aligned with the airflow.

As a result of the previous preferred embodiments of the method, the carbonated solid form leaving the air contactor device will have a fraction of carbonated material with high mechanical strength and a fraction of Ca(OH)₂ in the interior that may be unconverted. The experimental results indicate that the maximum crushing strength measurements of all tested samples are obtained when the effective porosity of the solids is at the lowest range of those tested (between 0.2-0.6, obtained with a commercial extrusion machine fed with a lime mortar with 32%w water). Therefore, a preferred embodiment of the method is when the Ca(OH)₂ solid form is obtained by extrusion of a Ca(OH)₂ mortar with a porosity of between 0.2-0.6. In these conditions, hard carbonated layers are formed, of a thickness between 1-10 mm, that provide the carbonated solid forms with suitable properties to substitute existing types of masonry units with similar mechanical properties. Porosities below 0.2 are not favored, because in addition to their slow rate of carbonation (requiring increasing air contactor devices volume, as will be discussed below), the extrusion process requires increasing pressures (and associated energy consumption in the extruder). On the other hand, samples of Ca(OH)₂ solid forms with porosities larger than 0.6 have resulted in Ca(OH)₂ solid materials with crushing strength values < 4 N (as will be seen below), that are increasingly difficult to handle without deformation or rupture as a solid form.

The fraction of unconverted Ca(OH)₂ in carbonated solid forms will eventually form pure CaCO₃, as is known to happen with all porous structures containing free Ca(OH)₂ accessible to ambient air. This means that the carbonated solid forms will continue to capture CO₂ from the atmosphere after leaving the air contactor device, until they are fully carbonated. Therefore, when considering the carbon balance of the method over time-scales of 1-10 years, the CO₂ capture efficiency of the method of this invention will be marked by the CO₂ avoided during the manufacture of Ca(OH)₂ solid forms from quarried CaCO₃, and not only by the actual CO₂ captured in the air contactor device. This is as long as the CO₂ from CaCO₃ calcination is permanently stored.

Furthermore, the cost of the CO₂ capture system, the overall environmental footprint and even the overall energy requirements will clearly be reduced if the carbonated solid forms coming out from the air contactor device can substitute existing masonry units in construction applications. This is because such products (i.e. hollow bricks or tiles) already require mining operations to access the raw materials, they need energy consuming extruding/molding techniques to acquire the targeted shapes, and they use substantial quantities of energy when high temperature thermal treatments are needed to provide them with their final mechanical properties. Replacing said masonry units by the carbonated solid forms resulting from the method of this invention will therefore save the energy needed to manufacture the original masonry units.

In another series of experiments, the carbonation of dry, Ca(OH)₂ porous samples in contact with ambient air at different levels of relative humidity has been investigated. Results confirm the need to feed air into the contactor device at conditions of full saturation in water, in order to reach the maximum carbonation conversion of Ca(OH)₂ to CaCO₃. These results support the choice of a preferred embodiment of the method wherein water is vaporized before the entrance of the air in the air contactor device to increase relative humidity to between 80-100%, because these highly saturated conditions allow maximum molar conversions (approaching 0.9) of Ca(OH)₂ to CaCO₃ in the carbonated layer of all solids tested.

The need for such high levels of humidity represents a certain restriction on the applicability of the method in arid areas with low humidity and scarce resources of water. Such limitation can be partially overcome when Ca(OH)₂ solids with specific surface area higher than 35 m²/g are used to manufacture the Ca(OH)₂ solid forms and water is vaporized at the air inlet of the contactor device to increase relative humidity to over 50%. These materials have demonstrated during the carbonation experiments that they can reach the maximum carbonation conversion over 0.9 at any relative humidity just slightly over 50%, and almost complete carbonation conversion when humidity approaches 100%.

On the other hand, modelling the evolution of the CO₂ capture efficiency in the axial direction in an air channel of a given length has revealed that the length of the air channels (and therefore the depth of the air contactor device) is about 20-25 % shorter if the solids move counter-currently from the exit of the air towards the entrance of the air in the air contactor device, rather than co-currently. In another preferred embodiment of the method, a solution is provided to the need of said countercurrent movement of solids, at velocities as low as 0.005-0.05 km/h. In said embodiment, the average velocity of displacement of the solids is achieved by steps or intermittent displacements of the stacks of Ca(OH)₂ solid forms, with the distance of each step being equal to the dimension of the stack in the direction of the airflow; said displacement being executed by a warehouse robot. The warehouse robot can move through a space under or nearby the stacks, lift the stack, execute the displacement, drop the stack on the floor and move to a nearby stack to execute another displacement. In another preferred embodiment the warehouse robot executes a rotation of 180ºC in the vertical axis of the stack during each displacement of the stack. In this way, the solid forms located in opposite sides of the stack are alternatively exposed to air at maximum and minimum concentrations, thereby increasing the homogeneity of the carbonation conversions in the final carbonated solid forms leaving the air contactor device.

The previous embodiments have been selected after solving a model to estimate CO₂ capture efficiency at the exit of an air channel or air contactor device; said model incorporating all experimental results obtained on the rate of carbonation of Ca(OH)₂ solid forms by fitting them to a Ficks's diffusion control kinetic model, wherein the estimation of the length of the air channels required to achieve the target CO₂ capture efficiency in the air contactor device is an additional step of the method of the present invention and comprises the following steps:
i. a step of estimation, from the carbon mass balance, of the flowrate of solids required to capture the targeted flow of CO₂ from the inlet air;
ii. a step of estimating the required length of the carbonation zone with a CO₂ transport model at the local conditions in the channels considering the mass transfer coefficient of CO₂ towards the wall of the porous Ca(OH)₂ solids and in series with the transport of CO₂ by diffusion in the stagnant air occupying the porosity of the porous solids.
iii. a step of estimation of the pressure drop of the air through the air channels to match the specifications of the air fans.

Finally, in order to have a full system capable of removing CO₂ from the atmosphere by using the above methods, it is necessary to complete the system by adding the following steps:
i. a step of mining and crushing limestone;
ii. a step of calcination of limestone to obtain pure CO₂ and lime;
iii. a step of permanently storing the CO₂ obtained from step ii);
iii. a step hydrating or slaking the lime from step ii) to obtain a Ca(OH)₂ mortar;
iv. a step of molding and drying of the mortar to obtain the porous Ca(OH)₂ solid form.

A variant of the previous embodiment for removing CO₂ from the atmosphere characterized by adding the following prior steps:
i. a step of crushing carbonated solid forms;
ii. a step of calcination of the crushed solid forms to obtain pure CO₂ and lime;
iii. a step of permanently storing the CO₂ from step ii);
iii. a step of hydrating or slaking the lime from step ii) to obtain a Ca(OH)₂ mortar;
iv. a step of molding and drying of the mortar to obtain the porous Ca(OH)₂ solid form.

In another preferred embodiment for removing CO₂ from the atmosphere the CaCO₃ entering the step of calcination ii) is any mixture of crushed limestone and crushed carbonated solid forms.

The claimed methods use an air contactor device that resembles a multi-story building structure with floors fully occupied by stacks of the solid forms of Ca(OH)₂, with the air flowing mainly through the air channels defined by the walls of the solid forms of Ca(OH)₂.

In a preferred embodiment, the air contactor device comprises an air inlet and an air outlet and stacks of solids in the interior positioned in such a way that the air channels in the stacks of solids are aligned with a main direction of an airflow directed to the air contactor device; wherein the air contactor device further comprises displacement means configured to displace the stacks of solids inside the air contactor device along the main direction of the airflow, at an average velocity of between 0.05 to 0.005 m/h.

As in other state-of-the-art air contactor device systems, several floors or modules in the building can be arranged to accommodate stacks of solid forms, that will be tightly packed and in proximity, unless the robot is executing a displacement nearby. Therefore, the stacks are stationary most of the time, moving by the intermittent displacements of the robots, as claimed. As in other air contactor devices, the air is driven by induced draft fans, ID fans, through the contactor device cross-sectional frontal area, and through the air channels formed during the stacking of the solids and the aligned of the stacks in the interior of the air contactor device. For the claimed dimensions of air channels and the mass balances applied to the air contactor device, we have estimated that the gas velocity through the air channel can be between 2-5 m/s while keeping the pressure drop in the contactor device below 200 Pa.

The skilled in the art will know how to adapt the methods of this invention to CO₂ capture applications where vitiated air with higher concentrations of CO₂, or even flue gases with CO₂ concentrations below 10000 ppmv of CO₂, need to be treated in similar arrangements of the method. Increasing the concentration of CO₂ in the air will facilitate the effective use of Ca(OH)₂ solids and require smaller air contactor devices. But it will also demand for increased quantities of vaporized/sprayed water, to humidify and cool down the air, because the carbonation reaction of Ca(OH)₂ is exothermic (-69 kJ/mol) and therefore there is a heating of the air as it is decarbonized. At steady state, the heating is negligible at just 1 ºC when capturing 50% of CO₂ from air of 500 ppmv, but this becomes 12ºC at 10000 ppmv, demanding for intermediate sections of the air contactor device to be sprayed with water to cool the air and keep relative humidity as claimed.

### BRIEF DESCRIPTION OF THE DRAWINGS

A set of drawings is attached wherein, with illustrative and non-limiting character, the following has been represented:

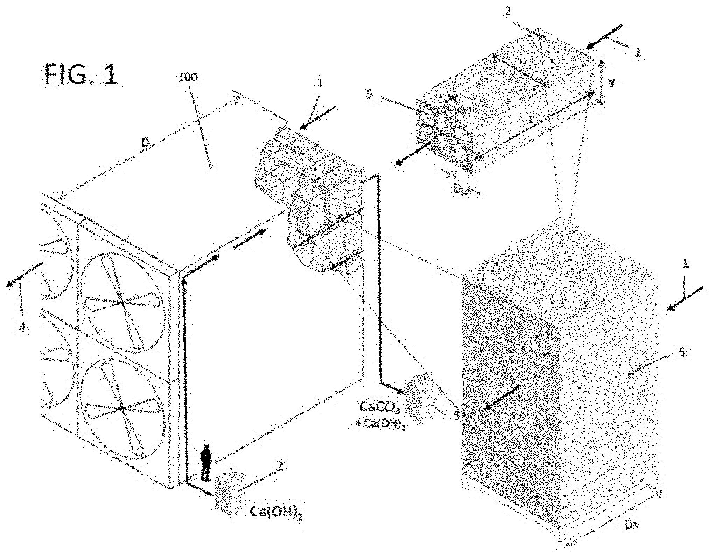

Figure 1 shows a schematic of a preferred embodiment of the method of this invention applied on an air contactor device.

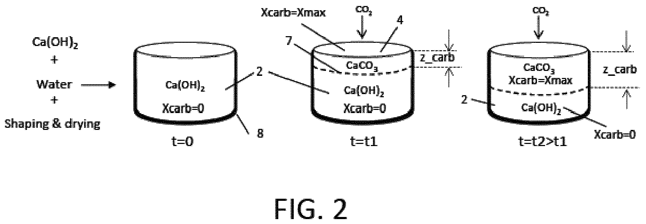

Figure 2 shows the main elements and variables in the carbonation experiments of porous Ca(OH)₂ solid forms.

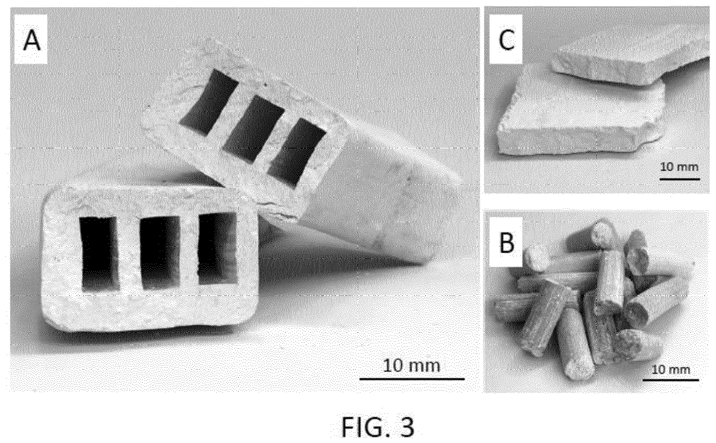

Figure 3 shows photographs of Ca(OH)₂ solid forms obtained after the drying of extrudes of a Ca(OH)₂ mortar with 32%w water fabricated in a DEX LAB extruder.

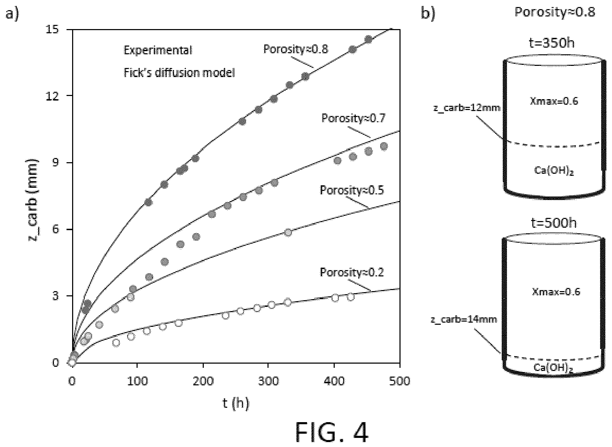

Figure 4A shows the evolution with time of the thickness of the carbonated layer, z_carb, developed within Ca(OH)₂ samples of packed porous powders (with specific surface area of 18.2 m²/g) prepared with different porosities, carbonating under humid air (500 ± 25 ppmv CO₂, relative humidity (RH) 52 ± 3% and temperature 19 ± 2°C) . Figure 4B. shows the thickness of the carbonated layer z_carb and Xmax at different depths in samples with a porosity≈0.8 after 350 h (top) and 500 h (bottom). Xmax= 0.6.

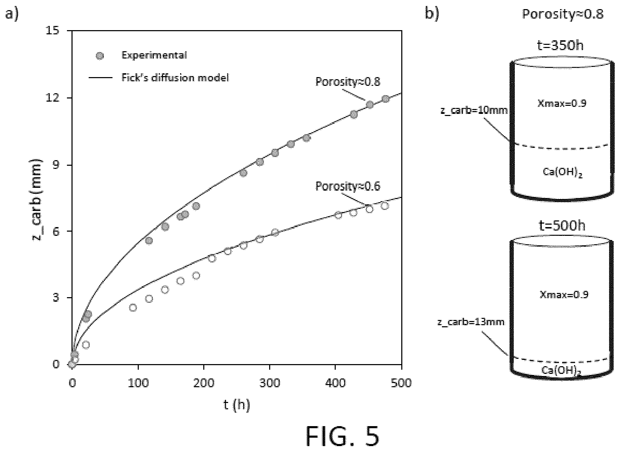

Figure 5 shows the results obtained at conditions as in Figure 4A, using Ca(OH)₂ with specific surface area of is 39.8 m²/g and Xmax= 0.9. Figure 5B shows two values of the thickness of the carbonated layer, z_carb, for a porosity of the Ca(OH)₂ solid form of 0.8, at two specific moments.

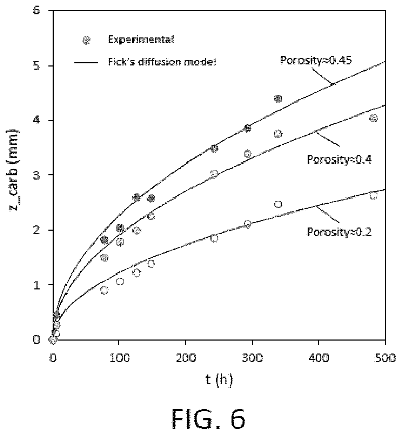

Figure 6 shows the evolution with time of the thickness of the carbonated layer, z_carb, developed in Ca(OH)₂ solid forms the same as those in Figure 3, extruded at different pressures to generate different porosity in the extrudes when dried. The extruded Ca(OH)₂ mortar (made with Ca(OH)₂ of specific surface area 18.2 m²/g mixed with 32%w of water) is dried before the experiment. The carbonation takes place at 20ºC, 450 ppmv and saturated air (>95% relative humidity). Xmax=0.9.

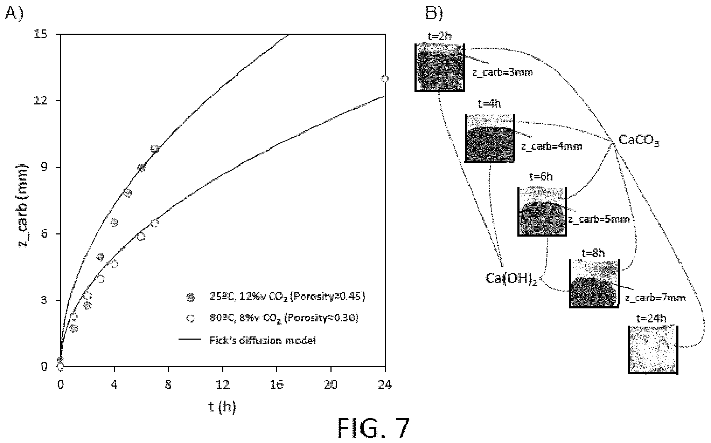

Figure 7A shows experimental results illustrating the validity of the Fick's diffusion model (solid lines) at high concentrations of CO₂ (12%v and 8%v) and temperatures (25ºC and 80 ºC respectively). Figure 7B shows photographs showing the neat carbonation reaction front advancing towards the bottom of the sample holder.

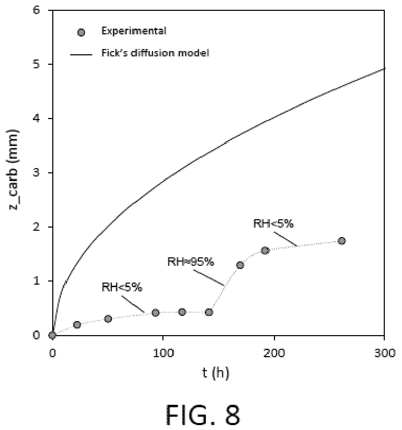

Figure 8 shows the evolution with time of the thickness of the carbonated layer, z_carb, developed on Ca(OH)₂ samples of porosity 0.5 submitted to a wide range of values of relative humidity (RH from <5% to about 95%). Solid line is the prediction of the Fick's model at the same carbonation conditions with >95% relative humidity (i.e., Xmax=0.9).

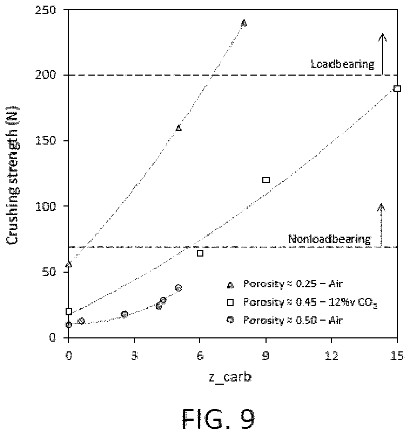

Figure 9 shows the evolution of the crushing strength (CS) with z_carb for dry mortar samples prepared from Ca(OH)₂ powder having an effective porosity of 0.45-0.5, carbonated under ambient air (dots) and under air with 12%vCO₂ (squares); and extruded samples with an average effective porosity of 0.25 tested under air (triangles). Dashed lines mark thresholds for non-loadbearing and loadbearing equivalent to those given by ASTM C652 standard.

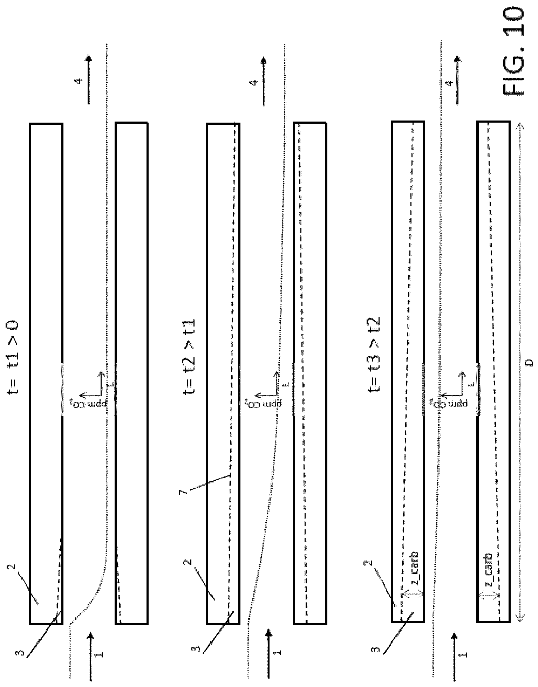

Figure 10 shows a qualitative representation of the carbonation process and axial CO₂ concentration profiles (dotted lines) for a stationary air channel defined by Ca(OH)₂ porous walls (at time t=0), developing a carbonated layer at time t1>0, that grows longitudinally and in thickness as t1 increases to t2 and to t3.

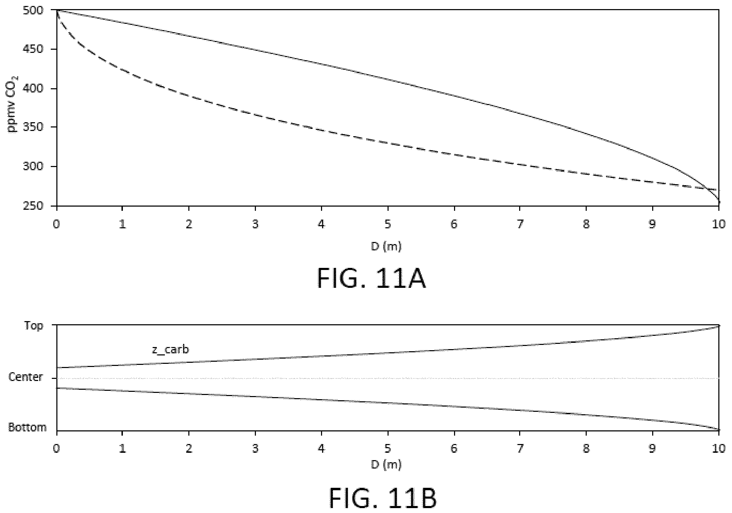

Figure 11A shows predictions of the steady state axial concentration profiles of CO₂ in an air channel of length D, when the air enters in countercurrent contact (solid line) and co-current (dotted line) with the carbonating walls of a continuous feed of Ca(OH)₂ solid forms, all at the conditions of the Example. Figure 11B shows the thickness of the carbonate layer, z_carb, along the air channel length D, at conditions as of Figure 11A.

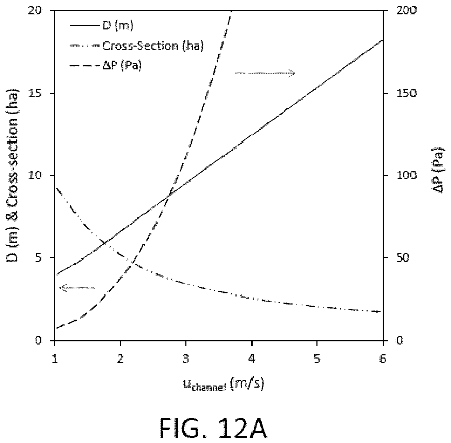

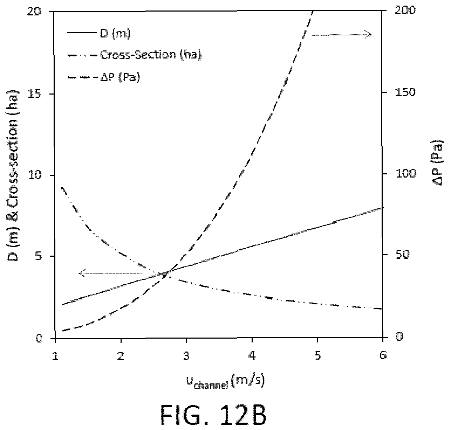

Figure 12A shows the results of a sensitivity analysis carried out with the model used to get the results given in Figure 11, to quantify the effect of the air velocity on the air contactor device depth (D) & air contactor device cross-sectional area (both in the left axis), and pressure drop (in Pa, in the right axis) to capture 1MtCO2/y with a capture efficiency of 50%. Figure 12B shows a similar analysis as that included in figure 12A but using a Ca(OH)₂ solid form with porosity of 0.5.

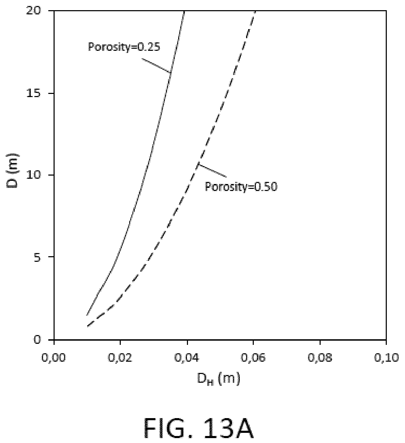

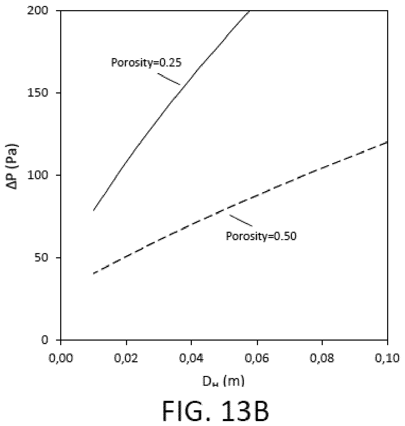

Figure 13A and 13B show the results of a sensitivity analysis carried out with the model used for Figures 11-12 to quantify the effect of the effective diameter of the air channel, D_{H}, on the air contactor device depth, D (Figure 13A) and pressure drop (Figure 13B), for two different values of effective porosity of the Ca(OH)₂ solid form.

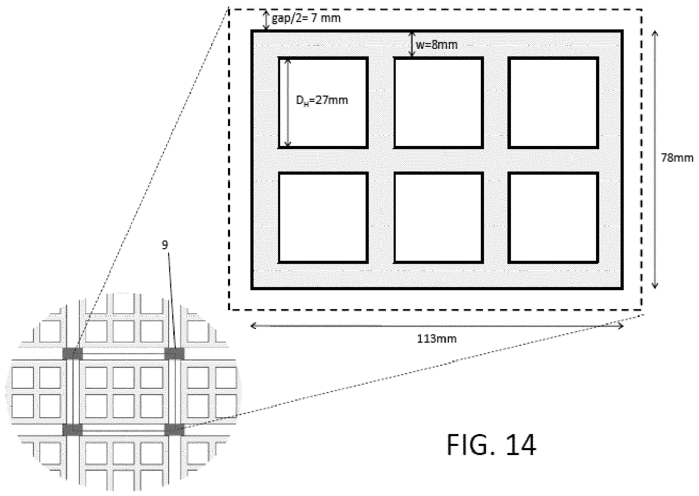

Figure 14 shows a frontal dimensions of the Ca(OH)₂ solid form used in the Example, and its distribution in the air contactor device cross-section.

### DETAILED DESCRIPTION OF THE INVENTION

Reference is made from this point to the accompanying drawings to support the claims. The target of the method represented in Figure 1 is to capture CO₂ from air (1) driven by ID fans to an air contactor device (100) device, where the CO₂ will react with Ca(OH)₂ contained in porous solid forms (2) to form carbonated solid forms (3) containing CaCO₃ (and some unconverted Ca(OH)₂) and air depleted in CO₂ (4). The method relies on state-of-the-art methods (not shown in Figure 1 for simplicity) to manufacture dry Ca(OH)₂ solid forms (2) (for example the hollow brick represented in Figure 1, that can be extruded from a lime mortar containing Ca(OH)₂ and water and then dried to adopt the represented form, as will be described below). The dimensions of all the elements in Figure 1 are only for illustrative purposes.

The method is characterized by a continuous feeding of Ca(OH)₂ solid forms (2) into the air contactor device (100) and an equivalent discharge of carbonated solid forms (3) from the air contactor device. In the preferred embodiment shown in Figure 1, the Ca(OH)₂ solid forms move inside the air contactor device in a countercurrent-direction with respect to the airflow. To arrange the contact between air and the solids the method relies on the stacking of Ca(OH)₂ solid forms (2) into stacks (5), so that an homogeneous distribution of air channels (6) is achieved inside the air contactor device (100), by aligning the Ca(OH)₂ solid forms (for example the holes (6) of the hollow brick used in the illustration of Figure 1). Such arrangement will reduce the pressure drop of the air through the air contactor device compared with an equivalent random packing of Ca(OH)₂ solid forms with the same average bed properties (i.e. in terms of bed porosity and effective solid properties) as the stacks.

Other characterizing parts of the method disclosed in this invention arise from experimental results investigating the carbonation rates of porous Ca(OH)₂ solid samples resembling a control volume of the Ca(OH)₂ solids forms, as well as from a model used to estimate the CO₂ capture efficiencies as a function of the properties of the Ca(OH)₂ solid forms including the solid wall thickness (w) shown in Figure 1, the equivalent diameter of the air channels produced when stacking the Ca(OH)₂ solid forms, D_{H}, the air velocity inside the air channels, and the air channel length, D, that will typically coincide with the depth (D in Figure 1) of the air contactor device (100) represented in Figure 1. The depth of the air contactor device, D, will therefore be an integer multiple of the length of a stack, Ds. The length of the stack, Ds, will therefore be an integer multiple of the length of the solid form, z.

The experimental work to support the claims on preferred embodiments of the method of Figure 1 has relied on the preparation of porous Ca(OH)₂ solid samples and their testing under suitable carbonation conditions that will be shown below. The method for sample preparation is summarized in Figure 2. Two commercial Ca(OH)₂ powders with different specific surface areas have been used for sample preparation: a Ca(OH)₂ powder used in construction applications and a high grade Ca(OH)₂ powder used for environmental applications, with specific surface area of 18.2 and 39.3 m²/g respectively. Since the porosity of the solid is known to be a major variable during carbonation of Ca(OH)₂ materials in ambient air, a wide range of porosities of between 0.2 to 0.8 have been tested. Three different methods have been used to obtain samples with different initial porosities and sample sizes: pelletization of the dry powder (under different ranges of pressures); preparation of a mortar by mixing Ca(OH)₂ with water (about 40% in weight unless stated otherwise), that is then dried in a mold to obtain the required shape; and extrusion of mortars (with about 32%w of water) to obtain brick-like shapes and other shapes (see Figure 3). To obtain highly porous samples (i.e. with porosities of between 0.6 and 0.8), dry Ca(OH)₂ powder was placed in cylindrical plastic vessels (8) of 1.5 cm diameter and height, with the top of the cylinder exposed as the only contacting surface of the bed of solids with air. Then, the powder was compressed using a dynamometer by applying a force to the top open surface of up to 200 N. A similar dry preparation method was used to obtain Ca(OH)₂ pellets with porosities of between 0.2 and 0.4 using a TDP-1.5 single punch tablet manual press fitted with an engine that supplies a maximum pressure of 15 kN, producing cylindrical pellets of 6 mm in diameter and about 4-6 mm height. Wet mortars were prepared by mixing Ca(OH)₂ powder with about 40%w distilled water. The mortars were shaped in molds of dimensions comparable to the dry pelletized samples prepared above. The conformed mortars were dried in an oven at 110ºC under N₂ to produce dry Ca(OH)₂ mortars with porosities between 0.4 and 0.6. Finally, other mortars with about 32%w water were extruded in a laboratory-scale extruder machine (model DEX LAB from Talleres Felipe Verdés S.A). Brick-like shapes such as those shown in Figure 3A were produced and then dried in an oven at 110ºC, as well as cylindrical-shape extrudes as shown in Figure 3B and flat plates extrudes as in Figure 3C.

Carbonation tests were conducted in two different laboratory set ups. The first set up was simply allowing the carbonation of the samples in an air current created from a computer cooling fan, blowing the air of the laboratory environment (where the CO₂ content was monitored to be between 475 and 525 ppmv and relative humidity between 50-55%). The second set up was a sealed glass container placed in a thermostatic bath to ensure a homogeneous temperature. The container is fluxed by air containing different concentrations of CO₂ and relative humidity. The weights of the carbonating samples were periodically measured with a precision balance in order to calculate their Ca(OH)₂ molar conversion to CaCO₃. Furthermore, to observe the carbonation fronts (7), some porous samples were cut axially and a phenolphthalein solution sprayed on their cut section (an example of this test will be shown in Figure 7B). Phenolphthalein is a sensitive pH indicator that turns colorless in acid solutions and pink in basic solutions. Therefore, it allows to distinguish between Ca(OH)₂ (pink colored) and CaCO₃ (colorless) layers of these materials.

Examples of results of the experimental investigations described above are given in Figures 4-8, representing the evolution with time (hours) of the thickness of the carbonated layer, z_carb (mm), developed by the samples as they carbonate. It became clear from these results, which are consistent with the state of the art in a qualitative manner, that the carbonation layer of any solid form of porous Ca(OH)₂, progresses as a neat carbonation front (7) advancing inwards, perpendicular from the walls of the solid form that are exposed to air with CO₂, as indicated in Figure 2 and 4. The carbonated layer reaches a certain maximum carbonation molar conversion (Xmax) of Ca(OH)₂ to CaCO₃, that has been found to vary between 0.6 and 1. An existing diffusion model of CO₂ in the dry porous structures based on Fick's diffusion law in porous media, has been used to fit the experimental results using an effective porosity of the sample as an adjustable parameter. The effective porosity needed to fit a Fick's diffusion model to the experimental results is consistently 5-20% lower than real porosities of the tested materials, especially in the samples with lower porosity, indicating that there are voids in the solid samples that are not accessible to the external air in contact with the samples. For simplicity, we use the effective porosity in the discussion that follows, unless indicated otherwise.

Solid lines in Figures 4-7 indicate the reasonable quality of the model when fitting the experimental results. To illustrate the wider validity of the Fick's diffusion model adopted in this patent to fit the experimental results, note that Figure 7 has been obtained under CO₂ concentration conditions (up to 12%v CO₂) that are more than 200 times larger than those present in ambient air. Such intense carbonation conditions have been used to accelerate the generation of carbonated product layers for further testing of mechanical properties (i.e., crushing strength, as discussed below).

It is important to note that the results of Figures 4-7 are well fitted with Fick's diffusion model only when the relative humidity is higher than 50%. At low relative humidities, the process of carbonation in the porous samples of Ca(OH)₂ used in this patent is controlled by the slow kinetics of carbonation of Ca(OH)₂. This is illustrated in Figure 8 which compares the predictions of the Fick's diffusion model (solid line) with experimental results (dotted line and circles, obtained when carbonating a Ca(OH)₂ cylindrical sample of 6 mm deep Ca(OH)₂ mortar, with a porosity of 0.5) when assuming a maximum conversion of 0.9 in the carbonated solids. As can be seen, a shift in the relative humidity, RH, (from 5% to 95% and then back to 5% again) has a dramatic impact on carbonation reaction rates. Another observed effect of relative humidities on the prepared samples is that the maximum carbonation conversion, Xmax, in the carbonated layers is closer to 0.9 when the relative humidity is between 80 and100% and closer to 0.6 when relative humidities are just 50-80%. An interesting exception to the previous rule can be seen in materials with high specific surface areas (see Figure 5) where relative humidities as low as 50-55 % still yields maximum carbonation conversions of about 0.9 when carbonating with air with 500±25 ppmv of CO₂. The use of these high specific surface materials should therefore be preferred in the manufacture of Ca(OH)₂ solid forms when the air does not have humidity >80%.

Also arising from the previous results is the need of vaporizing water at the air contactor device inlet. In some locations, when attaining high levels of humidity is difficult (for example in arid locations and with low availability of liquid water) a preferred embodiment will use materials of a high specific surface area of about 40 m²/g, so that the maximum carbonation conversions close to 0.9 can be achieved at around 50% relative humidity and water consumption for vaporization is minimised.

In addition to the reported measurements of carbonation conversion, crushing strength (CS) tests were carried out by measuring the peak force required to axially break the samples using the chisel standard adapter of a SHIMPO FGE-100X dynamometer. Said crushing strength has been translated to the compressive strength values used in standards to define "loadbearing" and "nonloadbearing" masonry units (for example ASTM C652 for hollow bricks) by comparing (when possible within the range of up to 500 Newton force available in the dynamometer) the peak force required to break dry mortar samples of different measured porosities when using the chisel vs. the same force needed when using a flat standard adapter with a contact surface of 113mm² of the same dynamometer. A ratio of 0.03 to 0.07 between the compressive strength (in MPa) and the crushing strength (in Newtons, as measured with the chisel adapter) has been found for the mortar samples of porosities from 0.4 to 0.6. The experimental results indicate that crushing strength mainly depends on the thickness of the carbonated layer (see Figure 9) and the porosity of the initial Ca(OH)₂ material. In all cases, the CS increases sharply with the increasing thickness of the carbonate layer, z_carb. As shown in Figure 9, carbonated samples of effective porosity of 0.25 (characteristic of solid forms obtained by extrusion as those in Figure 6) gain sufficient crushing strength for non-loadbearing applications when reaching a thickness of the carbonated layer larger than 1 mm. The same sample reaches load-bearing crushing strength standards when the thickness of the carbonated layer reaches a value of about 7 mm. All tested samples carbonated to their maximum level of conversion (between 0.6 and 0.9) have passed the threshold for non-loadbearing applications when the thickness of the carbonated layer is larger than 10 mm. This is therefore an important result, because as discussed above, if the carbonated solid forms (3) leaving the air contactor device (100) could find application as masonry units in the construction industry, the energy requirements and cost of the CO₂ capture system of the method of this invention can be reduced by avoiding the need to manufacture said masonry units by other means. It is therefore a preferred embodiment of this invention to use Ca(OH)₂ solid forms with the same dimensions as those characteristic in masonry applications, with wall dimensions between 5 mm and 50 mm (wall dimension is marked as w in Figure 1) even if the thickness of the carbonate layer only has develops a few mm, in order to moderate the residence time of the Ca(OH)₂ solid forms (2) in the air contactor device (100). Therefore, in some preferred embodiments, the depth of the air contactor device (indicated as D in Figure 1), and therefore the pressure drop and energy consumption by the ID fans driving air to the air contactor device, can be minimized by limiting the thickness of the carbonated layer, z_carb, to between 1 to 10 mm. In fact, a preferred embodiment of the method consists of producing carbonated solid forms with carbonated layers as small as 1-10 mm and then letting the carbonated solid forms, which still contain Ca(OH)₂ (3), to fully carbonate in their final structural position in the building (i.e. by absorbing CO₂ from the atmosphere over time scales of years). In such a scheme, the method of this invention will be able to claim the total quantity of CO₂ avoided during calcination as CO₂ captured, and not only the actual quantity of CO₂ captured as CaCO₃ (3) in the air contactor device (100). This is a unique advantage of this particular air capture method, when compared to any of the other alternative in the state of the art using other sorbent or solvents for CO₂ capture. An Example will illustrate this carbon balance in more detail.

Other preferred embodiments arise from the solution of a CO₂ capture reactor model to estimate axial CO₂ concentration profiles in an air channel in which air is driven to contact with the Ca(OH)₂ porous walls which define the air channel. The Fick's diffusion kinetic model (used in integrated form to plot the solid lines of Figures 4-7), allows the calculation of the rate of advance of the carbonation front, z_carb, inwards from any wall surface exposed to a known concentration of CO₂, and hence the flow of CO₂ being captured from the air by the solids at a given differential element of length in the air channel. As a result, the concentration of CO₂ will vary from the inlet to the outlet of the air contactor device and the thickness of the carbonated layer will also vary with time and location. In stagnant carbonating Ca(OH)2 solid forms, the local rates of CO₂ capture will vary greatly with position and time as the carbonation of the solids progresses. Figure 10 represents three qualitative examples of this carbonation process of a stationary air channel initially defined by stationary Ca(OH)₂ porous walls (at time t=0), developing a certain carbonated layer (3) at time t1>0, that grows longitudinally and in thickness at t2>t1 and at t3>t2. The axial CO₂ concentration profiles (i.e., from the inlet (1) to outlet of the air contactor device (4)) would also vary with time (dotted line in Figure 10). At a time t1, soon after the exposure of the Ca(OH)₂ forms to air, the air channel walls are highly reactive towards CO₂ because there is little or no carbonated product layer formed. When t1 is close to zero, and towards the exit of the air channel, the carbonation rate of the solids must be controlled by mass transfer gas film resistances such as those in other DAC systems, because there is no carbonated layer through which the CO₂ has to diffuse. A high capture efficiency in the air is represented in this case, because the concentration of CO₂ will be very low towards the exit of the air channel. This situation is not necessarily desirable in practice, because at the time t1, the right-hand side of the air channel is not being efficiently used to capture CO₂, as it will be causing a pressure drop (and associated energy penalty) linked to the flow of air in such part of the channel, without capturing CO₂ due to the low concentrations of CO₂ in that region. As time progresses to t2 (the central plot in Figure 10) the air channel will have a carbonated layer stretching the whole channel length, albeit with different values of product layer thickness (thinner towards the air exit, due to the lower concentrations of CO2 in such region from the beginning of the carbonation process). Further along in the carbonation process (t3>t2) the inlet of the air channel will become inefficient for CO₂ capture (i.e., with decreasing values for the rate of carbonation) because the thick carbonated layer developed up to that time t3 at the entrance of the air channel will make the local carbonation rates slower than at the exit of the air channel. Therefore, stationary or batch-type solid arrangements in the air contactor device, such as those described in the state of the art for other solid sorbent systems, are not desirable in a large scale air contactor device with carbonating stacks of Ca(OH)₂ solid forms, as they will be inherently inefficient as described above.

Another problem arising from such batch arrangements would be the lack of homogeneity in the carbonation conversions, as noted in Figure 10. Heterogeneity in local carbonation conversions of the carbonated solid forms may prevent the use of said forms in masonry applications, where homogeneity of properties in the materials is often regulated by building standards. Clearly, the feeding of a continuous flow of Ca(OH)₂ solid forms to the air contactor device, moving them within the air contactor device in counter-current mode with respect to the airflow, is the right approach to avoid the previous problems found in large scale air capture systems using Ca(OH)₂ in solid form. Feeding said solids at steady state will ensure that they all carbonate under similar conditions in their residence time in the air contactor device and a carbonated solid form (3) with a homogeneous carbonation conversion obtained at the solids exit of the air contactor device. To quantify said residence times, as well as the length required in the air channels to reach a certain CO₂ capture efficiency, an air channel reactor model has been developed.

The air channel reactor model assumes plug flow of movement of the solids (2) and the air (1) moving through the air channels defined by the wall of the Ca(OH)₂ solid forms. The model is solved by integrating, to the full length of an air channel, the rate of CO₂ captured in a given differential element of length in the air channel, where said rate of capture of CO₂ is mainly controlled by diffusion of CO₂ in the stagnant volume of air contained in the pores of the carbonated product layer, following Fick's diffusion model described above. The model assumes a steady state feed of Ca(OH)₂ solid forms (2) and a continuous extraction of carbonated solid forms (3). Therefore, a steady state in the axial concentration profiles of CO₂ in the air and in the axial thickness of the carbonated layer of the solids is reached. For any given set of variables adopted for the Ca(OH)₂ solid forms (in terms of air channel cross-section, thickness of the walls, porosity of the Ca(OH)₂, and value of Xmax) and for any given air velocity in the air channel, the model can calculate the steady state CO₂ concentration profile (and hence the CO₂ capture efficiency for a certain length of the air channel) and the pressure drop. Both variables need to be tuned to allow capture efficiencies between 40-70% and pressure drops below 200 Pa, that mark a compromise established in the state of the art of air contactor devices to limit the air contactor device cross-sections while minimising energy requirements in the ID fans used to drive air to the air contactor device and reach the air velocities in the air channels frontal cross-section (i.e., perpendicular to the direction of the airflow).

Figure 11 is an example of the predictions of the model, for an air contactor device filled with Ca(OH)₂ solid forms that are hollow bricks as in Figures 1 and with parameters and operating conditions as referred in the Example below. In Figure 11A, we plot the steady state axial concentration profile of CO₂ in air (1) as it decreases from the initial 500 ppmv at the inlet of the air channel (that coincides with the air inlet of the air contactor device (100)), when entering into counter-current contact with the walls of the Ca(OH)₂ solid forms moving in the opposite direction to the airflow. The air velocity is 2 m/s when referring to the whole the air contactor device frontal cross-section and 3.2 m/s when referring to the air channel cross-section free of solids. The evolution of z_carb is plotted in Figure 11B, i.e. for a square air channel of D_{H}=27 mm, just as the one used in the Example and represented in Figures 1 and 14 As can be seen in Figure 11, an air channel length of D=10 m is sufficient to achieve a CO₂ capture efficiency of 50% when the effective porosity of the Ca(OH)₂ solid forms is 0.25 (consistent with porosities used to fit experimental results of extruded materials in Figure 6). Since the carbon mass balance must be fulfilled, and the volumetric concentration of CO₂ in air is only 500 ppmv, the average velocity of the solid forms to supply the stoichiometric flow of Ca(OH)₂ (considering that the carbonation conversion of Ca(OH)₂ to CaCO₃ is 0.9 in the carbonated layer in the solid forms, plotted as z_carb in the plot at the bottom of Figure 11B) is extremely slow, about 0.01 m/h in this figure (see also the Example below). The countercurrent configuration represented by the solid line in Figure 11A is steepest near the air exit (on the right hand side of the plot) because that is the location where the unconverted Ca(OH)₂ solid forms (i.e. without any carbonated layer developed yet) are fed to the air contactor device. In this region the carbonation process is controlled by the mass transfer of CO₂ from the bulk of the airflow to the Ca(OH)₂ reacting surface.

As a dashed line in Figure 11A we plot the axial concentration profile of the CO₂ in the same air channel and flow conditions when the solids move cocurrently in the same direction as the air. As can be seen, such configuration is unfavourable, as it requires about 20% additional air channel length to achieve the same 50% capture efficiency.

Figure 12A has been built using the same model and identical solids as in Figure 11. The figure plots the effect of the air velocity (and hence the air velocity in the air channels, u_{channel}, in Normal m/s) on key design variables of the air contactor device like its depth, D (m), and the cross-sectional area of the air contactor device (in hectares, using the same y-axis in the plot) to accommodate the same flow of air in all cases (i.e., to capture 1 MtCO₂/year with a 50% capture efficiency). As can be seen, increasing air velocity in the air channels demands a proportional increase the depth, D, of the air contactor device to maintain the same capture efficiency. This translates into a reduction in the cross-section of the air contactor device, which is in principle beneficial to reduce the cross-section of ID fans driving the airflow into the air contactor device. However, pressure drops (right hand axis in Figure 13A, in Pascals) increase sharply, reaching values of ΔP>200 Pa over 3.5 m/s. Figure 12B is a similar figure built for Ca(OH)₂ solid forms which have been manufactured with a higher effective porosity of 0.5 (effective porosity is 0.25 in Figure 12A). The higher rate of carbonation of solids with higher porosity allows air channel velocities slightly of over 4 m/s while maintaining ΔP<200 Pa. The method of this invention is therefore able to operate at superficial gas velocities (referred to the total frontal cross-section of the air contactor device) of between 1.5-2.5 m/s which are comparable to those used in other contactor devices described in the state of the art and will lead to similar cross-sections and energy requirements for the ID fans driving the airflow through the air contactor device.

Figure 13A and 13B are two plots of solutions of the model to the same design problem as in Figures 12 (i.e., all points in the solid and dashed lines correspond to an air contactor device capturing 1 MtCO₂/y from air at 50% capture efficiency, with a velocity in the air contactor device frontal cross-section of 2 m/s and 3.2 m/s in the air channels). Figure 13A shows how the diameter of the air channel, D_{H}, affects the required length of the air channel (or depth of the air contactor device, D) when maintaining all the aspect ratios in the Ca(OH)₂ solid forms (i.e. when D_{H} changes, the value of the wall thickness, changes proportionally). As can be seen, D increases rapidly to values >20 m when the air contactor device is fed Ca(OH)₂ solid forms with an equivalent diameter D_{H} > 0.06 m, in particular for extruded forms with effective porosities of 0.25 as those used in the Example. As shown in Figure 13B, the pressure drop also increases. The volume of the air contactor device (proportional in this case to D, because air velocities are the same in all points in this figure) and therefore the total inventory or holdup of Ca(OH)₂ solid forms in the contactor device will increase accordingly. Therefore, it is clearly preferred to operate the method with values of D_{H} lower than 0.06 m and always lower than 0.1 m. On the other hand, note that values of D_{H} below 0.01 m in Figure 13 would correspond to wall thicknesses w < 0.003 m in the solid form used in this example (i.e., to maintain aspects ratios). Such thin walls in the Ca(OH)₂ solid form should also be avoided because they have not been viable during the extrusion tests conducted so far, and are likely to generate carbonated hollow bricks that do not compare well with wall thicknesses of common masonry units, whose market substitution is one of the expected benefits of the method of this invention.

Regarding the solid's velocities, it is assumed in preferred embodiments of the method that the maximum molar carbonation conversion of the carbonated layers reaches a value of at least 0.9, therefore the carbon mass balance dictates the minimum flow of Ca(OH)₂ that must be fed to the air contactor device to capture the given target of CO₂ (namely 1 MtCO₂/y in previous figures and in the Example below). When translating such solid flow into a solid velocity, this ranges from values as low as 0.05 to 0.005 m/h. Sliding the stacks of Ca(OH)₂ solid forms at such low velocities requires a review of state of the art techniques to slowly displace large loads on the floors of the air contactor device (for example using ball transfer units). A preferred embodiment is characterised by the substitution of the steady continuous movement of the Ca(OH)₂ solid forms to an intermittent faster displacement followed by stationary periods. In other words, a state of the art warehouse robot moving at an average speed of just 2 km/hour can be responsible for the displacement of 2000 stacks of Ca(OH)₂ solid forms by 1 m in one hour. Since the residence time of the stacks in the air contactor device is between 500 and 2000 hours, it follows that a single robot can be in charge of the solid movement of all solids in a large-scale air contactor device (see Example below). In addition, said movements could be organised in such a way as to allow a rotation of 180º of the stacks in each displacement, for example by ensuring that the target stack for displacement has sufficient space free of stacks around it (as represented in Figure 1). Such rotation movement will alternate the exposure of the opposite sides of the stack to the incoming air with the highest CO₂ concentration, thereby improving the homogeneous carbonation of all solid forms in the stack.

Although all previous discussions have referred to capture of CO₂ from air with 500 ppmv of CO₂, it should be evident to the skilled in the art that a similar method could be applied with small modifications to the capture of CO₂ from vitiated air (i.e., like the exhaust of ventilation systems of buildings) or other disperse diluted sources of CO₂.

It should also be evident to the skilled in the art that to adapt the methods of this invention to a wider variety of cases than those discussed above, in particular considering the wide variety of carbonated solid forms that could be introduced in the air contactor device to manufacture carbonated solid forms that could be used in construction applications.

### EXAMPLE

In this example, the method of this invention is applied to the capture of CO₂ from air, using Ca(OH)₂ solid forms with the following properties:
- Hollow brick, as represented in Figure 1, with the following external dimensions: length z= 250 mm, width x=113 mm, and height y=78 mm; six equal square holes 27 mm side, which mark the equivalent diameter of the air channels, D_{H=} 27 mm; solid wall thickness of w=8 mm, assumed to be homogeneously distributed in all solid walls in the brick (i.e. between holes wall surfaces and between the external surface and the closest wall surface as it is the case in the hollow brick shown in Figure 1).
- It is assumed that when using stacking tools for these bricks, as described in the state of the art, it is possible to stack the bricks with a 14 mm gap between them (for example with small plank elements (9) of wood, or any other material to separate the bricks as shown in Figure 14) so that the air channel created by aligning the gaps between bricks has the same equivalent diameter (27 mm) as the square holes. This allows the contact of the air with the external surface of the brick as well as with the internal surface created by holes in the interior of the brick. Stacks of bricks are arbitrarily chosen to be of 1.8 m³ (in meters: 1.8x1.0x1.0), that results of the packing of 20x8x4 hollow bricks as in Figure 1, with gaps between the bricks of 14 mm.
- The superficial air velocity in the contactor device is 2 m/s in normal conditions, which translates into 3.2 m/s in normal conditions in the interior of the air channels when considering the packing arrangement of solids described in the previous two points. With this velocity, the frontal cross-sectional area of the air contactor device needed to capture 1 MtCO₂/y with a 50% capture efficiency with air is 32286 m², comparable to those reported in the state of the art using other air capture methods.
- The air is assumed to have 500 ppmv and is saturated in humidity with 90% relative humidity. In these conditions, the maximum molar carbonation conversion of Ca(OH)₂ to CaCO₃ in the carbonated layer growing inwards from all the brick's surfaces is assumed to be 0.9.

For the adopted Ca(OH)₂ solid form (the hollow brick) and the above geometries, it is possible to analytically integrate the differential equation that describes, in a differential element of length of the air channel, the flow of CO₂ diffusing from the air flowing in the air channel towards the interior of the Ca(OH)₂ solid form, reacting with the Ca(OH)₂ in the carbonation reaction front located at a certain distance from the air channel wall. Such function is represented in Figure 11 for the conditions set in the previous points and for an air channel length or air contactor device depth of depth D=10 m. The air pressure drop in these conditions has been estimated to be 130 Pa.

As can be seen in Figure 11, it is possible to achieve 50% CO₂ capture efficiency with the adopted design variables for the Ca(OH)₂ solid forms and air contactor device. In this particular example, the carbonated solid forms exiting the air contactor device are not fully carbonated, as the thickness of the carbonated layer at the stack's exit of the contactor device is estimated to be 3.24 mm while the thickness of the wall, w, of the Ca(OH)2 solid forms has been adopted as 8 mm (allowing a maximum thickness of the carbonated layer of 4 mm in both sides of the wall). The complete carbonation of the brick (i.e., when the thickness of the carbonated layer coincides with the thickness of the brick walls) would require a deeper air contactor device (i.e., an air channel length of 12.2 m, generating a pressure drop of 160 Pa) when leaving all other conditions unchanged.

Optimum values of capture efficiencies and pressure drop would be determined from these types of figures when considering the cost balance between operating cost linked to the energy and fan cost and the need to minimize the total volume of (and therefore the cost) in the air contactor device.

Regarding the solid movement in the air contactor device, (at 0.013 m/h in this example) the number of stacks of bricks fitting in the 10 m of air contactor device depth is 10. Each displacement of the stack of bricks must move the stack by 1 m (i.e., the length of the stack, D_{H}, in the direction of the air channels). Since the total number of stacks as defined above, is estimated for the entire air contactor device volume to be 175465, there is a need to execute 2280 m of displacements of stacks each hour. This means that a single warehouse robot moving at an average velocity of just 2.3 km/h, which lies within the normal operating range for existing robots, could carry out all the necessary movements of the bricks within the air contactor device.

## Claims

1. A method of capturing CO₂ from air using solid forms of calcium hydroxide comprising:
i.) a step of stacking porous Ca(OH)₂ solid forms so that uniformly distributed air channels of equivalent diameter between 0.01-0.1 m are formed, with the walls of the air channels being the walls of the Ca(OH)₂ solid forms exposed to the airflow;
ii.) a step of transporting the stacks of solids to the interior of an air contactor device and positioning them so that the air channels in the stacks of solids are aligned with a main direction of an airflow directed to the air contactor device;
iii.) a step of displacing the stacks of solids inside the air contactor device along the main direction of the airflow, at an average velocity of between 0.05 to 0.005 m/h;
iv) a step of discharging the stacks of carbonated solid forms formed in the air contactor device after 200-2000 hours of residence time.

2. The method of claim 1 further comprising a step of manufacturing Ca(OH)₂ solid forms comprising a wall thickness of between 5 and 50 mm of porous Ca(OH)₂ solid material exposed to airflow, wherein the thickness of the carbonated layer grown inwards from the surfaces exposed to airflow is between 1-10 mm.

3. The method of claim 2 wherein the step of stacking further comprises forming homogeneously distributed air channels from the stacking of the Ca(OH)₂ solid forms with a gap between them of an equivalent diameter between 0.01-0.1 m when the Ca(OH)₂ solid form has the dimensions of an existing masonry unit without holes.

4. The method of claim 2 wherein the step of stacking further comprises forming homogeneously distributed air channels from the stacking of the Ca(OH)₂ solid forms with a gap between them that has the same equivalent diameter as a hole when the Ca(OH)₂ solid form is a masonry unit with said holes, such as a hollow brick, and the holes of the masonry unit aligned with the airflow.

5. The method of any one of claims 2 to 4 wherein the step of manufacturing Ca(OH)₂ solid forms comprises extruding a Ca(OH)₂ mortar with a porosity of between 0.2-0.6.

6. The method of claim 1 further comprising a step of vaporizing water before the entrance of the air in the air contactor device.

7. The method of claim 6 wherein the Ca(OH)₂ solids have a specific surface area higher than 35 m²/g.

8. The method of claim 1 wherein the step of displacing the stacks of solids inside the air contactor device along the main direction of the airflow, at an average velocity of between 0.05 to 0.005 m/h is carried out moving the solids in counter-current from the exit of air towards the entrance of the air in the air contactor device.

9. The method of claim 1 wherein the step of displacing the stacks of solids inside the air contactor device along the main direction of the airflow, at an average velocity of between 0.05 to 0.005 m/h is carried out with by steps or intermittent displacements of the stacks of Ca(OH)₂ solid forms, with the distance of each step being equal to the dimension of the stack in the direction of the airflow.

10. The method of claim 9 wherein the displacement by steps or intermittent displacements of the stacks of Ca(OH)₂ solid forms comprises a rotation of 180ºC in a vertical axis of the stack during each displacement of the stack.

11. The method of claim 1 further comprises a step of estimation of the length of the air channels required to achieve the target CO₂ capture efficiency in the air contactor device which in turn comprises the following steps:
i. a step of estimation, from the carbon mass balance, of the flowrate of solids required to capture the targeted flow of CO₂ from the inlet air;
ii. a step of estimating the required length of the carbonation zone with a CO₂ transport model at the local conditions in the channels considering the mass transfer coefficient of CO₂ towards the wall of the porous Ca(OH)₂ solids and in series with the transport of CO₂ by diffusion in the stagnant air occupying the porosity of the porous solids;
iii. a step of estimation of the pressure drop of the air through the air channels to match the specifications of the air fans.

12. The method of claim 1 further comprising:
i. a step of mining and crushing limestone;
ii. a step of calcination of limestone to obtain pure CO₂ and lime;
iii. a step of permanently storing the CO₂ obtained from step ii);
iii. a step of hydrating or slaking the lime from step ii) to obtain a Ca(OH)₂ mortar;
iv. a step of molding and drying of the mortar to obtain the porous Ca(OH)₂ solid form.

13. The method of claim 1 further comprising:
i. a step of crushing carbonated solid forms;
ii. a step of calcination of the crushed solid forms to obtain pure CO₂ and lime;
iii. a step of permanently storing the CO₂ from step ii);
iii. a step of hydrating or slaking the lime from step ii) to obtain a Ca(OH)₂ mortar;
iv. a step of molding and drying of the mortar to obtain the porous Ca(OH)₂ solid form.

14. The method of claim 13 wherein in the step of calcination ii), the crushed solid forms to obtain pure CO₂ and lime is any mixture of crushed limestone and crushed carbonated solid forms.

15. Air contactor device comprising an air inlet and an air outlet and stacks of solids in the interior positioned in such a way that the air channels in the stacks of solids are aligned with a main direction of an airflow directed to the air contactor device; wherein the air contactor device further comprises displacement means configured to displace the stacks of solids inside the air contactor device along the main direction of the airflow, at an average velocity of between 0.05 to 0.005 m/h.
